# EUROPÄISCHE PATENTSCHRIFT

(11) **EP 1 961 094 B1**
(45) Veröffentlichungstag und Bekanntmachung des Hinweises auf die Patenterteilung: **01.08.2018**
(21) Anmeldenummer: 06806677.8
(22) Anmeldetag: 03.11.2006
(51) Int. Cl.: H02G 3/30

(54) **BEFESTIGUNGSSCHIENE FÜR EINEN LANGGESTRECKTEN GEGENSTAND**
FIXING RAIL FOR AN ELONGATE OBJECT
RAIL DE FIXATION POUR OBJETS ALLONGES

(30) Priorität: 03.11.2005 DE 202005017160 U
(43) Veröffentlichungstag der Anmeldung: 27.08.2008
(73) Patentinhaber: Hellermann Tyton GmbH, 25436 Tornesch (DE)
(72) Erfinder: SPIESS, Hagen, 22547 Hamburg (DE)
(74) Vertreter: Robert, Vincent
(86) Internationale Anmeldenummer: PCT/EP2006/010572
(87) Internationale Veröffentlichungsnummer: WO 2007/051639

(56) Entgegenhaltungen:
- EP-A2- 0 967 702
- CA-A1- 2 359 714
- US-A- 3 802 654

## Beschreibung

Die Erfindung betrifft eine Befestigungsschiene zum Anbinden eines Bands an einen langgestreckten Gegenstand, insbesondere einen Kabelbaum oder eine Leitung, die eine an dem Gegenstand anzuliegen bestimmte Lagerfläche und eine davon abgewandte, das Band aufnehmende Bindefläche aufweist. Zum Befestigen von Kabelbäumen, Leitungen oder anderen langgestreckten Gegenständen an einer Tragstruktur sind Schienen bekannt, die einerseits zur Verbindung mit dem langgestreckten Gegenstand ausgebildet sind und andererseits ein Mittel zur Befestigung an der Tragstruktur aufweisen. Sie haben eine längliche Form und wenden dem langgestreckten Gegenstand eine Lagerfläche zu, an die dieser sich anlegen kann. Zwecks besserer Kraftübertragung kann die Lagerfläche der Form des langgestreckten Gegenstands angepasst sein. Die Schiene wird an dem langgestreckten Gegenstand angebunden. Dazu verwendet man in der Regel im Querschnitt flache Bänder, insbesondere Kunststoffbänder, wie sie als sogenannte Kabelbänder im Handel sind. Sie umschlingen den langgestreckten Gegenstand und die Schiene unter einer vorgegebenen Spannung, wobei sie auf die dem Gegenstand abgewandte Fläche der Schiene eine Bindekraft ausüben. Diese Fläche wird daher im vorliegenden Zusammenhang als Bindefläche bezeichnet. Um eine hinreichende Unterstützung für den, zu bindenden Gegenstand zu bilden, hat die Schiene eine Länge, die wesentlich größer ist als die Breite eines zum Binden verwendeten Bandes. Bei bekannten Schienen (FR-A-2861157) ergibt sich daraus der Nachteil, dass die Position der Schiene im Verhältnis zu dem Band unsicher ist, weil das Band längs der Schiene verrutschen kann. Zur Erhöhung der Festigungssicherheit ist vorgeschlagen worden, an der Unterseite der Schiene Rastzähne vorzusehen, da die zum Einkrallen in das Band des Kabelbinders ausgebildet sind (DE-A-19704674). Da aus Gründen einer hohen Haltekraft das Band des Kabelbinders aber in der Regel aus zähem Material besteht, können die Rastzähne nicht ausreichend eindringen oder brechen bei zu großer Krafteinwirkung ab. Um dieses Risiko zu vermeiden, ist weiter vorgeschlagen worden, dass die Rastzähne durch einen stegartigen Vorsprung an der Unterseite ersetzt werden, wobei in dem Band des Kabelbinders ein entsprechender Längsschlitz ausgeformt ist, so dass der Vorsprung darin eingreifen kann. Dies bedeutet aber eine starre Positionierung des Bandes in Bezug auf die Schiene, so dass die Montage nur in genau einer Position erfolgen kann. Die Handhabung ist dadurch erschwert, oder es sind aufwendige, eigens unverlierbar an die Schiene angeformte Kabelbinder erforderlich(DE-A-19843633). Ersteres ist aufwendig bei der Montage, und die zweitgenannte Variante ist aufwendig bei der Herstellung. Eine weitere Variante umfasst nachgiebige Vorsprünge an der Unterseite der Schiene, die den Kabelbinder von der Schiene beabstanden (EP-A-0967702). Die Vorsprünge weisen einen Steg auf, der zur Schiene konkav gebogen ist. Die Enden des Stegs fungieren als Begrenzungswände für ein eingelegtes Band. Bei dieser Variante können die Kabelbinder nur in den von den Begrenzungswänden definierten Positionen angebracht werden.

Der Erfindung liegt ausgehend von dem zuerst genannten Stand der Technik die Aufgabe zugrunde, eine verbesserte Schiene bereitzustellen, die bei leichter Montierbarkeit das Band sicher an der Schiene hält.

Die erfindungsgemäße Lösung liegt in den Merkmalen des unabhängigen Anspruchs und vorzugsweise in denen der abhängigen Ansprüche.

Befestigungsschiene zum Anbinden mittels eines Bands an einen langgestreckten Gegenstand, insb. einen Kabelbaum oder eine Leitung, die eine an dem Gegenstand anzuliegen bestimmte Lagerfläche und eine davon abgewandte, das Band aufnehmende, sich in Längsrichtung erstreckende Bindefläche aufweist, wobei die Bindefläche eine Mehrzahl von quer zur Längsrichtung nachgiebigen Vorsprüngen aufweist, dadurch gekennzeichnet, dass die Vorsprünge gegenüber parallel zur Längsrichtung der Schiene wirkenden Kräften steif sind, dass die zur Verformung der Vorsprünge quer zur Bindefläche erforderliche Kraft gering ist im Vergleich mit der Bandkraft und dass die Vorsprünge zungenartig flach ausgebildet sind. Die Reihe dieser Vorsprünge ist länger als die Breite des Bandes. Ein an beliebiger Stelle der Bindefläche angeordnetes Band legt sich über einen oder mehrere Vorsprünge. Da diese quer zur Erstreckung der Bindefläche nachgiebig sind, werden sie niedergedrückt. Es findet auch auf der einen und/oder der anderen Seite nicht weit entfernt benachbarte Vorsprünge vor, die nicht niedergedrückt sind und sich daher mehr oder weniger in derselben Höhe wie das Band selbst befinden. Sie sind daher in der Lage der seitlichen Verschiebung des Bands Widerstand entgegenzusetzen. Damit dieser Widerstand hinreichend groß ist, soll die Widerstandsfähigkeit der Vorsprünge gegenüber in Längsrichtung der Schiene wirkenden Kräften hinreichend groß sein im Verhältnis zu den vorauszusetzenden Verschiebekräften und jedenfalls größer als die Kraft, die zur ihrer Verformung quer zur Bindefläche erforderlich ist. Diese Eigenschaft wird mit dem Wort steif bezeichnet.

Die Nachgiebigkeit der Vorsprünge quer zur Erstreckung der Bindefläche ist groß genug, wenn sie von einem Band, das mit einer vorauszusetzenden Mindestbindekraft gespannt ist, mehr oder weniger niedergedrückt werden, so dass die benachbarten Vorsprünge höher stehen. Bevorzugt wird eine Ausführung, bei welcher die Nachgiebigkeit der Vorsprünge so groß ist bzw. ihr Verformungswiderstand quer zur Bindefläche so gering ist, dass sie bei Anwendung der Mindestbindekraft vollständig niedergedrückt werden; denn das Band kann sich dann an einer quasi starren Fläche abstützen und die Bindesicherheit wird nicht dadurch beeinträchtigt, dass die Vorsprünge noch mehr oder weniger nachgeben können.

Die Nachgiebigkeit der Vorsprünge kann plastisch oder elastisch sein. Die üblicherweise für derartige Artikel verwendeten Kunststoffe (beispielsweise Polyamid) ermöglichen beides.

Damit auch Relativverschiebungen zwischen der Schiene und dem zu bindenden Gegenstand möglichst unterbunden werden, kann die Lagerfläche mit Reibvorsprüngen versehen werden. Das sind Vorsprünge, die unter der Bindekraft eine Reibkraft verursachen, die der Verschiebung entgegenwirkt. Diese Reibvorsprünge sind zweckmäßigerweise als quer zur Längsrichtung der Lagerfläche verlaufende Rippen ausgebildet.

Die Erfindung wird im Folgenden unter Bezugnahme auf die Zeichnung näher erläutert, die ein vorteilhaftes Ausführungsbeispiel veranschaulicht. Es zeigen:
- Fig. 1: eine perspektivische Ansicht auf die Lagerfläche,
- Fig. 2: eine perspektivische Ansicht auf die Bindefläche,
- Fig. 3: eine Ansicht lotrecht auf die Bindefläche,
- Fig. 4: eine Seitenansicht,
- Fig. 5: einen Schnitt gemäß Linie V-V in größerem Maßstab mit Band und
- Fig. 6: denselben Schnitt ohne Band.

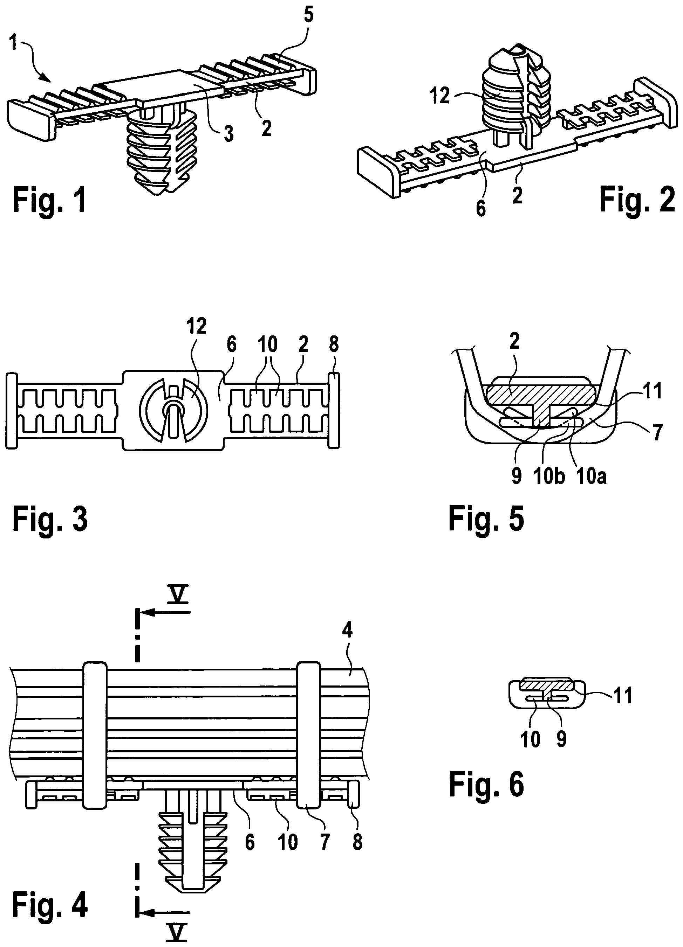

Die Schiene 1 wird hauptsächlich von einer Platte 2 gebildet, deren in Fig. 1 oben erscheinende Fläche die Lagerfläche 3 zur Auflage des zu bindenden Gegenstands 4 bildet. Sie trägt Querrippen 5, die einer relativen Längsverschiebung des Gegenstands 4 zu der Schiene entgegenwirken sollen. Die Form dieser Fläche ist im Wesentlichen eben dargestellt. Sie kann der Form des zu bindenden Gegenstands in nicht ebener Weise angepasst sein. Wenn der Gegenstand eine zylindrische Querschnittsform aufweist, kann die Lagerfläche 3 beispielsweise im Querschnitt entsprechend gekehlt sein.

Die in Fig. 1 unten und in Fig. 2 oben erscheinende Bindefläche 6 der Platte 2 dient zur Aufnahme mindestens eines Spannbands 7. Vorzugsweise ist die Bindefläche so lang und bei symmetrischer Ausbildung mit zwei Flügeln ausgebildet, dass zwei Spannbänder 7 vorgesehen werden können. Diese sind von herkömmlicher Art und bedürfen daher hier keiner Erläuterung. Ihre Breite ist mehrfach geringer als die Länge der Bindefläche 6 bzw. als die Länge jedes Flügels der Bindefläche 6.

Die Bindefläche 6 weist an den Enden Verdickungen 8 auf, die dafür sorgen, dass im Falle extremer Verschiebekräfte die Bänder 7 keinesfalls über das Ende der Schiene hinausgleiten können. In der Regel wird eine solche Verschiebung aber schon durch die erwähnten und nun näher beschriebenen Vorsprünge verhindert.

In der Mitte der Bindefläche 6 verläuft eine Längsrippe 9, an der mindestens auf einer Seite, vorzugsweise aber beiderseits über die gesamte Länge der Bindefläche eine Reihe von zungenförmigen Vorsprüngen 10 angeordnet ist. Diese verlaufen in Abstand von der Bindefläche 6. Sie ragen über die Verbindungslinie der zugehörigen Seitenkante 11 der Bindefläche 6 mit dem Grat der Rippe 9 hinaus. Da das Band unter Spannung etwa dieser Verbindungslinie folgt (siehe Fig. 6), wird ein Vorsprung 10a, der sich unter dem Band 7 befindet, niedergedrückt. Die Vorsprünge 10b, die sich neben dem Band 7 befinden, behalten ihre ursprüngliche Stellung und ragen also im Verhältnis zu diesem vor; sie befinden sich neben ihm. Sollte das Band 7 eine Neigung zeigen, sich in Längsrichtung der Schiene 1 zu verschieben, so stößt es gegen den nächsten benachbarten Vorsprung 10b und wird von diesem festgehalten.

Damit der Widerstand, den die Vorsprünge 10 dieser Verschiebung entgegensetzen, möglichst groß ist, aber die zu ihrer Verformung durch das darüber gespannte Band 7 möglichst gering sind, sind sie als flache Zungen ausgebildet mit einer geringen Dimension (Dicke) in einer Querebene (parallel zur Schnittebene V-V) und quer zum Verlauf des Bandes sowie mit einer beträchtlichen Dimension (Breite) in der Längsrichtung der Schiene. Die Dicke beträgt weniger als die Hälfte der Breite. Das bedeutet, dass ihr Widerstandsmoment gegenüber einer Verbiegung durch das darüber gespannte, der geringer ist als ein Achtel ihres Widerstandsmoments gegenüber Kräften, die in der Längsrichtung der Schiene auf sie wirken. Vorzugsweise liegt die Dicke bei etwa einem Drittel oder einem Viertel der Breite. Die Länge soll wenigstens so groß sein wie die Breite.

Die Vorsprünge 10 haben in dem dargestellten Beispiel im entspannten Zustand eine Richtung, die etwa parallel zur Platte 2 verläuft. Ihre Richtung weicht nur wenig von der Richtung des gespannten Bands 7 ab. Ihre Verformung und die dafür aufzuwendende Kraft sind daher gering. Diese Form ist vorteilhaft, kann aber auch anders gewählt werden. Beispielsweise können die Vorsprünge 10 stärker gegenüber der Platte 2 bzw. der Bandrichtung geneigt und entsprechend kürzer sein. Bei einer weiteren Ausführungsalternative steht eine Reihe von Vorsprüngen statt der Rippe 9 lotrecht von der Platte 2 vor. Sie sind ebenso wie in dem dargestellten Beispiel als flache Zungen ausgebildet. Von dem darüber gespannten Band werden sie zur einen oder anderen Seite gebogen oder geknickt. Die neben dem Band verbleibenden Vorsprünge bleiben stehen und sorgen für den Verschiebewiderstand.

Die erfindungsgemäße Schiene dient in der Regel dazu, den zu bindenden Gegenstand mit einer Tragstruktur oder einem anderen Gegenstand zu verbinden. Sie ist zu diesem Zweck mit einem Befestigungsmittel versehen, das in dem dargestellten Beispiel als sogenannter Tannenbaumfuß 12 ausgebildet ist, der dazu bestimmt ist, in eine Haltebohrung eingedrückt zu werden. Es können stattdessen beliebige andere Befestigungsmittel vorgesehen sein.

Die Schiene wird zweckmäßigerweise einstückig aus Kunststoff.hergestellt, beispielsweise Polyamid.

## Patentansprüche

1. Befestigungsschiene zum Anbinden mittels eines Bands an einen langgestreckten Gegenstand (4), insb. einen Kabelbaum oder eine Leitung, die eine an dem Gegenstand anzuliegen bestimmte Lagerfläche (3) und eine davon abgewandte, das Band aufnehmende, sich in Längsrichtung erstreckende Bindefläche (6) aufweist, wobei die Bindefläche (6) eine Mehrzahl von quer zur Längsrichtung nachgiebigen Vorsprüngen (10) aufweist, **dadurch gekennzeichnet, dass** die Vorsprünge (10) gegenüber parallel zur Längsrichtung der Schiene (2) wirkenden Kräften steif sind, dass die zur Verformung der Vorsprünge (10) quer zur Bindefläche (6) erforderliche Kraft gering ist im Vergleich mit der Bandkraft und dass die Vorsprünge (10) zungenartig flach ausgebildet sind.

2. Schiene nach Anspruch 1, **dadurch gekennzeichnet, dass** die Dicke der Vorsprünge (10) nicht größer ist als die Hälfte ihrer Breite.

3. Schiene nach einem der Ansprüche 1 bis 2, **dadurch gekennzeichnet, dass** die Bindefläche (6) mit einer Endverdickung versehen ist.

4. Schiene nach einem der Ansprüche 1 bis 3, **dadurch gekennzeichnet, dass** die Lagerfläche (2) Reibvorsprünge (5) trägt.

5. Schiene nach Anspruch 4, **dadurch gekennzeichnet, dass** die Reibvorsprünge Querrippen (5) sind.

6. Schiene nach einem der Ansprüche 1 bis 5, **dadurch gekennzeichnet, dass** sie mit einem Befestigungsmittel (12) zur Verbindung mit einer Tragstruktur versehen ist.

## Claims

1. Fixing rail for tying by means of a strap to an elongate object (4), in particular a cable harness or a line, comprising a bearing surface (3) to be adjacent to the object and a binding surface (6) facing away from the object for receiving the strap, extending in longitudinal direction, wherein the binding surface (6) comprises a plurality of projections (10) resilient transversely to the longitudinal direction, **characterized in that** the projections (10) are rigid with respect to forces acting parallel to the longitudinal direction of the rail (2), **in that** the force required to deform the projections (10) transversely to the binding surface (6) is low in comparison with the strap force, and **in that** the projections (10) are tongue-like flat.

2. Rail according to claim 1, **characterized in that** the thickness of the projections (10) is not greater than half their width.

3. Rail according to one of claims 1 to 2, **characterized in that** the binding surface (6) is provided with an end thickening.

4. Rail according to one of claims 1 to 3, **characterized in that** the bearing surface (2) comprises friction projections (5).

5. Rail according to claim 4, **characterized in that** the friction projections are transverse ribs (5).

6. Rail according to one of claims 1 to 5, **characterized in that** it is provided with a fastening means (12) for connection to a support structure.

## Revendications

1. Rail de fixation pour l'attachement au moyen d'une bande sur un objet allongé (4), en particulier sur un faisceau de câbles ou sur une conduite, ledit rail présentant une surface de montage (3) destinée à s'appliquer contre l'objet et une surface de liaison (6) détournée de celle-ci, recevant la bande et s'étendant en direction longitudinale, la surface de liaison (6) présentant une pluralité de saillies (10) souples transversalement à la direction longitudinale,
**caractérisé en ce que**
les saillies (10) sont rigides vis-à-vis des forces agissant parallèlement à la direction longitudinale du rail (2),
**en ce que** la force nécessaire pour déformer les saillies (10) transversalement à la surface de liaison (6) est faible par comparaison à la force de la bande, et
**en ce que** les saillies (10) sont réalisées plates en forme de languettes.

2. Rail selon la revendication 1,
**caractérisé en ce que**
l'épaisseur des saillies (10) n'est pas supérieure à la moitié de leur largeur.

3. Rail selon l'une des revendications 1 à 2,
**caractérisé en ce que**
la surface de liaison (6) est pourvue d'un épaississement terminal.

4. Rail selon l'une des revendications 1 à 3,
**caractérisé en ce que**
la surface de montage (2) porte des saillies de friction (5).

5. Rail selon la revendication 4,
**caractérisé en ce que**
les saillies de friction sont des nervures transversales (5).

6. Rail selon l'une des revendications 1 à 5,
**caractérisé en ce que**
il est pourvu d'un moyen de fixation (12) pour la liaison avec une structure porteuse.
